# EUROPÄISCHE PATENTANMELDUNG

(11) **EP 2 221 650 A1**
(43) Veröffentlichungstag der Anmeldung: **25.08.2010**
(21) Anmeldenummer: 10154381.7
(22) Anmeldetag: 23.02.2010
(51) Int. Cl.: G02B 6/44

(54) **Lichtwellenleiter-Verteilerschrank**

(30) Priorität: 23.02.2009 DE 202009002488 U
(71) Anmelder: VV-Hammer GmbH, 73489 Jagstzell (DE)
(72) Erfinder: Hammer, Ralf, 73489, Jagstzell (DE)
(74) Vertreter: Raunecker, Klaus Peter

(57) **Zusammenfassung**

Die Erfindung betrifft einen Lichtwellenleiter-Verteilerschrank, mit in einem Gehäuse angeordneten Spleißmodulen, wobei aus einer Anzahl von vertikal übereinander angeordneten Spleißmodulen ein Spleißmodulstapel ausgebildet ist und zumindest ein Spleißmodul über eine vertikale Achse aus dem Spleißmodulstapel nach außen ausschwenkbar ist.

## Beschreibung

Die Erfindung betrifft einen Lichtwellenleiter-Verteilerschrank gemäß dem Oberbegriff des Anspruchs 1.

Verteilersysteme von Lichtwellenleitern (LWL) bestehen zumeist aus Spleißboxen, Kabelführungskanälen und Kabelabfangschienen, die in einem Verteilergehäuse angeordnet sind. Bei den bekannten Lichtwellenleiter-Verteilern dienen die als Spleißboxen bezeichneten Aufnahmekammern zur Trennung der eingebauten Teile in eingangs- und ausgangsseitige Teilbereiche. Die Höhe der Spleißboxen zur Verteilung einer Vielzahl von Lichtwellenleitern bestimmt unter anderem die Bauhöhe des gesamten Verteilersystems.

Aus der DE 40 08 840 C1 ist ein Spleißverteiler für Lichtwellenleiter (LWL) mit LWL-Spleißkämmen bekannt, in denen die LWL-Einzelfasern von ankommenden LWL-Außenkabeln oder LWL-Faserbündeln verteilt werden und mit abgehenden LWL-Einzelfasern verbunden werden können. Die Außenkabel, die LWL-Faserbündel und die LWL-Einzelfasern können zugentlastet in einem Gehäuse angeordnet werden. Hierbei wird eine kompakte Einheit aus einer Basisträgerplatte, mehreren Trägerplatten mit jeweils mindestens einem LWL-Spleißverteiler und einem Deckel gebildet, die auf kleiner Befestigungsfläche übereinander gestapelt werden. Die Trägerplatten bieten die Möglichkeit einer zugentlasteten Zuführung der LWL-Außenkabel, bestehend aus LWL-Faserbündeln mit einer Vielzahl von Einzelfasern.

Des Weiteren ist aus der DE 41 07 228 C2 eine LWL-Spleißbox als nach vorne und oben offener LWL-Spleißauszug ausgebildet. Dieser ist mit zweiteiligen Teleskopauszügen in einen zur Vorderseite offenen Baugruppenträger eingebaut. Eine Frontblende mit LWL-Kupplungen ist im Bereich der vorderen Unterkante des Spleißauszuges abklappbar angeordnet und kann mittels lösbarer Verschlusselemente in der Schließstellung an dem Spleißauszug arretiert werden. Mehrere LWL-Spleißkassetten sind dabei auf einem Zwischenboden des Spleißauszuges übereinander angeordnet. Im Bodenbereich des Spleißauszuges ist unterhalb der Spleißkassetten ein Ablagefach für Rangierleitungen oder dergleichen ausgebildet.

Auch bekannt sind aus DE 102 10 778 B4 ein Gehäuse oder Gestell mit einer Kabelführungsvorrichtung für Glasfaserkabel mit mindestens einem Führungsansatz mit gerundetem Umlenkabschnitt, der an einem Tragkörper von diesem mit seiner Krümmungsachse senkrecht abstehend angebracht ist. Der Tragkörper ist eine im Wesentlichen rechteckförmige horizontale Tragplatte. In Verlaufsrichtung einer aufzulegenden Glasfaser sind entsprechende Umlenkeinheiten angeordnet. Die Tragplatte zum Anbringen an Rahmenschenkeln oder Montageschienen des Gehäuses oder Gestells weist Befestigungsabschnitte auf und ist mit nach unten abgebogenen weiteren Umlenkabschnitten versehen. Eine solche Umlenkung ist z.B. günstig, wenn Glasfaserkabel an einer Frontseite oder Rückseite eines horizontal angeordneten Einbaugehäuses angeschlossen und anschließend nach oben oder unten geführt werden sollen.

Es ist Aufgabe der Erfindung, einen Lichtwellenleiter-Verteilerschrank mit hoher Packungsdichte zu schaffen, bei dem Spleißmodule leicht zugänglich sind und alle erforderlichen Zu- und Abführleitungen übersichtlich untergebracht werden können.

Erfindungsgemäß wird diese Aufgabe mit den in Anspruch 1 genannten Merkmalen gelöst. Die weiteren rückbezogenen Ansprüche betreffen vorteilhafte Aus- und Weiterbildungen der Erfindung.

Die Erfindung schließt einen Lichtwellenleiter-Verteilerschrank ein, mit in einem Gehäuse angeordneten Spleißmodulen, wobei aus einer Anzahl von vertikal übereinander angeordneten Spleißmodulen ein Spleißmodulstapel ausgebildet ist und zumindest ein Spleißmodul über eine vertikale Achse aus dem Spleißmodulstapel nach außen ausschwenkbar ist.

Bei der erfindungsgemäßen Lösung handelt es sich um einen Lichtwellenleiter-Verteilerschrank, aus dem englischen Sprachraum übernommen auch als ODF bezeichnet (optical distribution frame).

Das Gehäuse eines Verteilerschranks, ausgeführt als Standschrank, umfasst eine Abdeckung im Boden- und Deckelbereich, optional auch Seitenteile. Eine vordere Fronttüre ist entweder einteilig oder auch mehrteilig ausgeführt, um einen erleichterten Zugang zu öfter frequentierten Teilbereichen im Verteilerschrank zu gewährleisten. Meist werden derartige Verteilerschränke von der Frontseite aus bedient. Weiter ausgebildet ist ein Einführungskabelkanal für Lichtwellenleiter, um eine getrennte Führung der ankommenden und abgehenden Kabel zu gewährleisten.

In einem Modulstapel können auch alle Spleißmodule über eine vertikale Achse nach außen ausschwenkbar ausgeführt sein. Hierzu sind meist, von der Frontseite aus betrachtet, auf der rechten oder linken Seite Drehgelenke angeordnet. Denkbar sind allerdings auch Modulstapel, bei denen die jeweiligen Spleißmodule im Stapel alternierend um eine vertikale Achse schwenkbar sind. Mit anderen Worten, die Spleißmodule können im Spleißmodulstapel, von der Frontseite her betrachtet, einzeln oder als ganze Stapelteile im Paket wechselseitig auf der linken bzw. rechten Seite drehbar ausgeführt sein. Im eingeklappten Zustand können auch Arretierungseinrichtungen am Spleißmodul für eine definierte Schließstellung sorgen.

Ein Spleißmodul ist leicht aus dem Spleißmodulstapel ausschwenkbar, wodurch der Zugang zu den üblicherweise auf dem Bodenblech des Spleißmoduls befestigten Spleißkassetten erleichtert wird. Die Verdrahtung des Spleißmoduls, insbesondere der Anschluss der LWL-Kupplungen, ist auf diese Weise einfach möglich. Die nach der Verdrahtung erfolgende weitere Verteilung mit Hilfe von sogenannten Patchkabeln oder Rangierleitungen ist ebenfalls vorteilhaft ausgeführt, da diese auf den Führungselementen auch vorrätig abgelegt werden können.

Ein besonderer Vorteil der erfindungsgemäßen Lösung ist, dass der Lichtwellenleiter-Verteilerschrank aufgrund der gestapelten Baueinheiten eine hohe Packungsdichte und Bedienerfreundlichkeit aufweist. Da jedes Spleißmodul für sich ausschwenkbar ist, wird bei der Vielzahl der zu verlegenden Kabel eine übersichtliche Untereinheit eines Baugruppenträgers geschaffen. Ein schneller und einfacher Einbau der einzelnen Lichtwellenleiter ist dadurch gewährleistet.

Die erfindungsgemäße Lösung kommt also mit einem Schwenkvorgang aus, bei dem die zurückgelegten Wegstrecken so begrenzt sind, dass gegenüber herkömmlichen Spleißverteilern nur mit geringer oder gar keiner Kabelüberlänge gearbeitet werden muss. Die Kabel müssen durch geringere Wegstecken beim Verlegen auch nicht nachgeführt werden.

In besonders bevorzugter Ausführungsform kann jedes Spleißmodul eine halbe Höheneinheit aufweisen. Eine Höheneinheit als standardisierte Maßeinheit für die Höhe eines Elektronikgehäuses entspricht 1¾ Zoll. In jedem Spleißmodul können hierbei über Stecker bis zu 24 Fasern abgelegt werden. Hierdurch wird eine besonders kompakte Einheit mit sehr hoher Packungsdichte gebildet. Das Spleißmodul kann dabei aus einem metallischen Werkstoff hergestellt, tauchgrundiert und pulverbeschichtet sein.

In bevorzugter Ausführungsform kann eine Kabelabfangplatte unterhalb der Spleißmodule angeordnet sein. Über die Kabelabfangplatte werden die eingangsseitigen Kabelbündel geführt und entsprechend zur weiteren Verteilung vorbereitet. Derartige Kabelabfangplatten können randseitig auch entsprechend gebogen ausgeführt sein, um die Kabel auf der Platte möglichst tangential aufzunehmen und ohne Knickstellen weiterzuleiten. Die Lichtwellenleiter werden so über erlaubte Biegeradien sowohl eingangsseitig als auch zur weiteren Verteilung der Bündel ausgangsseitig über die Abfangplatte geführt. Hierdurch wird eine geordnete und übersichtliche Kabelführung im LWL-Verteilerschrank unterstützt.

Vorteilhafterweise kann auf der Kabelabfangplatte eine Abfangeinrichtung für Faser-Zentralelemente angeordnet sein. So werden die Kabelbündel im geöffneten Zustand zur Zugentlastung fixiert. Hierzu können die Zentralelemente der Kabel an Schellen als Kabelabfangung befestigt werden, die auf der Kabelabfangplatte angeordnet sind.

In einer vorteilhaften Ausgestaltung der Erfindung können im Anschluss an die Kabelabfangplatte die Kabel in Führungsschläuchen am Spleißmodulstapel entlang geführt sein. Hierdurch werden ausgehend von der Kabelabfangplatte eindeutig zuordenbare Kabelführungen angelegt.

In einer weiteren vorteilhaften Ausführungsform kann in jeden der Führungsschläuche ein Modul adressiert und auf der Eingangsseite unterscheidbar gekennzeichnet sein. Zur Unterscheidbarkeit können unterschiedliche Farbgebungen verwendet werden. Derartige Führungsschläuche können beispielsweise sogenannte Miniflexschläuche sein, von denen jedes einzelne ein bestimmtes Modul adressiert und auf der Einführungsseite farblich gekennzeichnet ist. Auf diese Weise werden bei der Umlenkung der Fasern auch die zulässigen Biegeradien eingehalten.

Vorteilhafterweise können in einem Spleißmodul bis zu 24 Fasern angeschlossen sein. In einem Modul können zwei Spleißkassetten für jeweils 12 Fasern angeordnet sein. Derartige kleine Baugruppen gewährleisten eine übersichtliche Handhabung beim Anschließen der Lichtwellenleiter aus Kabelbündeln an der Frontseite eines Spleißmodulstapels. Hierdurch werden Montagezeiten wesentlich reduziert.

Ein weiterer Vorteil kann resultieren, wenn in einem Spleißmodul zwei Spleißkassetten für jeweils 12 Fasern angeordnet sind.

In einer vorteilhaften Weiterbildung der Erfindung können seitlich am Spleißmodulstapel Führungselemente entlang einer der Seitenwände des Gehäuses angeordnet sein, über die Patchkabel zum jeweiligen Spleißmodul geführt werden können. Derartige tonnenförmige Führungs- oder Umlenkelemente sind so gestaltet, dass die Kabel ohne Knickstellen in ausreichendem Radius umgelenkt und im Verteilerschrank geführt werden können. Insbesondere bei einheitlich langen Patchkabeln werden aufgrund der unterschiedlich langen Anschlüsse die Überlängen der Kabel auf derartigen Führungselementen abgelegt.

Vorteilhafterweise können 72 Spleißmodule angeordnet sein. Dies entspricht einem Spleißmodulstapel mit einer Höhe von 63 Zoll bzw. ungefähr 160 cm. Hierdurch können im Verteilerschrank bis zu 1728 Lichtwellenleiterfasern abgelegt werden. Daneben ist es auch denkbar, 78 oder 84 Spleißmodule in dem Spleißmodulstapel anzuordnen.

Die Führungsschläuche können in einer kammartigen Struktur an einer Seitenwand des Verteilerschranks gehaltert sein, wodurch sich die einfache Möglichkeit ergibt, die Führungsschläuche aus der Struktur zu entnehmen. Dies wird dadurch weiter erleichtert, dass die Führungsschläuche in der kammartigen Struktur kreuzungsfrei verlegt sind.

Hierdurch wird die Möglichkeit geschaffen, ein Spleißmodul aus dem Spleißmodulstapel vollständig herauszunehmen, was insbesondere durch die leichte Entnehmbarkeit der Führungsschläuche aus der kammartigen Struktur und ihre kreuzungsfreie Führung erleichtert wird.

Daneben ist es von Vorteil, wenn die vertikale Achse in der Weise angeordnet ist, dass sie zwischen der Rückwand des Verteilerschrankes und den an das Spleißmodul angeschlossenen Patchkabeln verläuft. Durch die beschriebene Anordnung der vertikalen Achse werden die Anschlusskabel bzw. die Lichtwellenleiter besser zugänglich, ohne dass sich die Anordnung der vertikalen Achse störend beispielsweise bei Wartungs- oder Spleißarbeiten auswirkt.

In einer weiteren vorteilhaften Ausführungsform der Erfindung ist der erfindungsgemäße Lichtwellenleiter-Verteilerschrank mit einer Modulhalterung insbesondere zur Anbringung von Splittermodulen ausgestattet. Diese Modulhalterung kann beispielsweise an der oberen Stirnseite des Lichtwellenleiter-Verteilerschranks angeordnet sein und aus einem geeignet geformten Blechteil gegebenenfalls mit Stehbolzen zur Verschraubung von Modulen wie beispielsweise Splittermodulen ausgebildet sein. Die Modulhalterung kann von der oberen Stirnseite des erfindungsgemäßen Verteilerschranks nach innen hängend oder auch auf dieser stehend angeordnet sein. Vorteilhaft dabei ist, dass beispielsweise Splittermodule oder weitere Baugruppen in einfacher Weise an dem Verteilerschrank angebracht werden können.

Weitere vorteilhafte Weiterbildungen und Ausgestaltungen der Erfindung ergeben sich aus den nachfolgend anhand der Zeichnungen prinzipmäßig beschriebenen Ausführungsbeispielen.

Es zeigt:
- Fig. 1: schematisch eine Frontansicht eines Lichtwellenleiter-Verteilerschranks;
- Fig. 2: eine schematische Darstellung eines Spleißmodulstapels;
- Fig. 3: eine schematische Detailansicht eines Lichtwellenleiter-Verteilerschranks im Bereich einer eingangsseitigen Kabelabfangplatte;
- Fig. 4: eine schematische Detailansicht eines Lichtwellenleiter-Verteilerschranks im Bereich der ausgangsseitigen Führungselemente;
- Fig. 5: eine Ausführungsform einer Modulhalterung in einer perspektivischen Ansicht, bei der diese zum hängenden Einbau vorgesehen ist;
- Fig. 6: eine ausschnittsweise Darstellung des oberen Bereichs eines erfindungsgemäßen Lichtwellenleiter-Verteilerschranks, bei welchem die Modulhalterung aus Fig. 5 hängend im oberen Bereich angeordnet ist;
- Fig. 7: eine Ausführungsform der Modulhalterung zum stehenden Anbringen an einem erfindungsgemäßen Lichtwellenleiter-Verteilerschrank; und
- Fig. 8: die in Fig. 7 gezeigte Modulhalterung stehend an der Oberseite eines Lichtwellen-Verteilerschranks angeordnet.

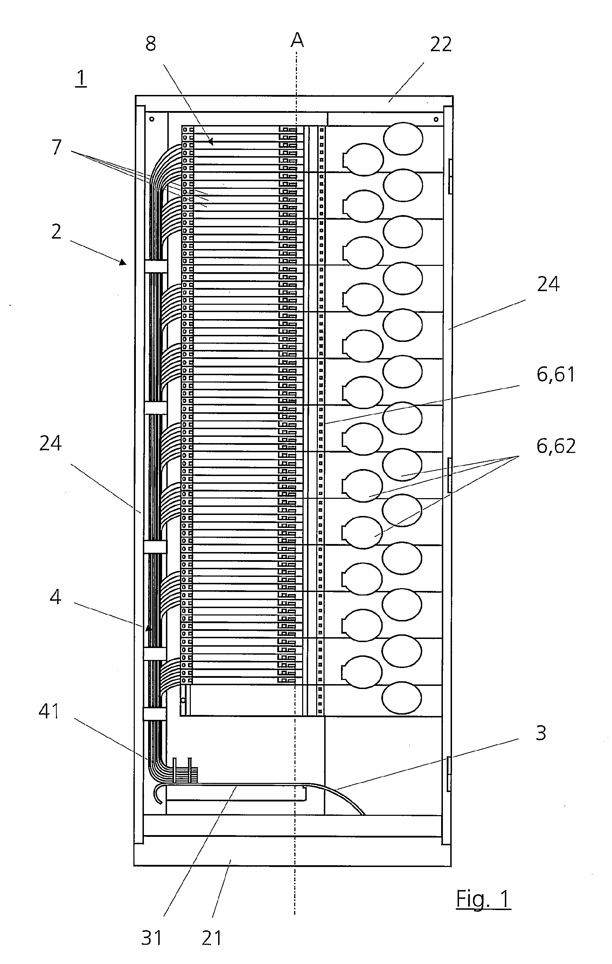

Fig. 1 zeigt schematisch eine Frontansicht eines Lichtwellenleiter-Verteilerschranks 1. Das Gehäuse 2 des Verteilerschranks 1 ist als Standschrank mit einer Bodenabdeckung 21 und einer Deckelabdeckung 22 ausgeführt und mit senkrechten Seitenteilen 24 versehen. In diesem Falle ist der Verteilerschrank 1 von der Frontseite aus zugänglich, die gegebenenfalls mit einer Fronttüre verschlossen werden kann. Die Anschluss- und Abgangskabel sind über, in der Figur nicht dargestellte, Kabeldurchführungen zentral über Ausnehmungen am Gehäuse 2 hindurchgeleitet.

Eingangsseitig werden die Anschlusskabel auf eine Kabelabfangplatte 3 zur Kabelabfangung 31 geführt. Über den Einführungskabelkanal 4 werden die geöffneten Kabelbündel in Miniflexschläuche 41 als Führungsschläuche eingebracht. Jedes Kabelbündel wird im Miniflexschlauch 41 bis zum jeweiligen Spleißmodul 7 vorgeschoben. Nachfolgend wird die Schublade des Spleißmoduls 7 herausgeschwenkt und das Kabelbündel unter Einhaltung des zulässigen Biegradius eingezogen, bis das Bündel an der Kabelabfangplatte 3 glatt gezogen ist. Insgesamt werden für den Loop in der Spleißkassette bis zum Anschließen ungefähr 160 cm Kabel benötigt. Nach dem Einschieben einer Bündelader eines Kabelbündels, die beispielsweise aus 12 Lichtwellenleitern besteht, werden die Lichtwellenleiter in einer Spleißkassette 72 eines Spleißmoduls 7 eingelegt. Bevor die einzelnen Lichtwellenleiter an Steckern angeschlossen werden können, müssen die Bündeladern mit einem geeigneten Werkzeug geöffnet und gereinigt werden, um diese zum Spleißen vorzubereiten. Die um eine vertikale Achse A aus dem Spleißmodulstapel 8 schwenkbaren Spleißmodule 7 gewährleisten einen leichten Zugang beim Verlegen und Anschließen der Lichtwellenleiter.

Ausgangsseitig sind Führungselemente 6 für die Weiterleitung der einzelnen LWL-Fasern angeordnet. Bei den in Figur 1 dargestellten Führungselementen 6 handelt es sich um einen Führungskamm 61 und zwei Reihen Trommeln 62, auf denen die Überlängen der Patchkabel abgelegt werden können.

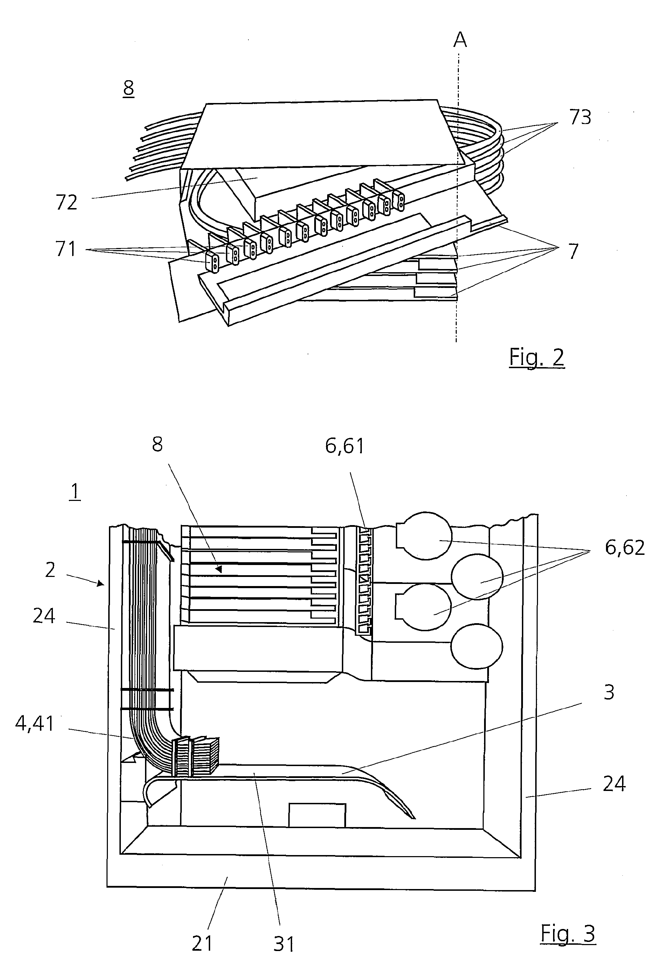

Fig. 2 zeigt eine schematische Darstellung eines Spleißmodulstapels 8 mit schwenkbaren Spleißmodulen 7. Das oberste Spleißmodul 7 ist aus dem Spleißmodulstapel 8 zum Ablegen der Bündeladern geöffnet. Hierzu wird ein Spleißmodul 7 über die vertikale Achse A mittels eines Drehgelenks herausgeschwenkt. Über eine Kabelzuführung 73 können die eingehenden Bündeladern mit vorgegebenem Radius zum Spleißmodul 7 geleitet werden. Insgesamt führen jeweils zwei Miniflexschläuche jeweils zwei Kabelbündel zu einem Spleißmodul 7. Im Spleißmodul befinden sich üblicherweise zwei Spleißkassetten 72, um 2 x 12 Lichtwellenleiter bzw. Patchkabel an die Stecker 71 anzuschließen. Zur Kabelführung zwischen den Spleißkassetten 72 werden in den Figuren nicht näher dargestellte Führungsschläuche eingesetzt.

Fig. 3 zeigt eine schematische Detailansicht eines Lichtwellenleiter-Verteilerschranks 1 im Bereich einer im Gehäuse 2 angeordneten eingangsseitigen Kabelabfangplatte 3.

Eingangsseitig werden die Anschlusskabel auf eine Kabelabfangplatte 3 zur Kabelabfangung 31 geführt. Hier werden die LWL-Kabel geöffnet und deren Faser-Zentralelemente zur Zugentlastung, beispielsweise mit einer Kabelschelle, entsprechend fixiert. Die Kabelabfangplatte 3 ist zur Bodenabdeckung 21 hin mit einem ausreichend großen Biegeradius als Biegekontrolle umgebogen, um Knickstellen im Anschlusskabel zu vermeiden. Über den Einführungskabelkanal 4 wird jedes Kabelbündel im Miniflexschlauch 41 bis zum jeweiligen Spleißmodul 7 eingeschoben, bis dieses am Spleißmodul 7 anstößt. Mit Hilfe eines Silikonsprays kann eine bessere Gleitfähigkeit für das Einschieben eines Kabelbündels erzielt werden. Der Spleißmodulstapel 8 befindet sich über der Kabelabfangplatte 3.

Ausgangsseitig sind ein Führungskamm 61 sowie ein Teil der Trommeln 62 als Führungselemente 6 für die Weiterleitung der einzelnen LWL-Fasern aus dem unteren Bereich des Spleißmodulstapels 8 dargestellt.

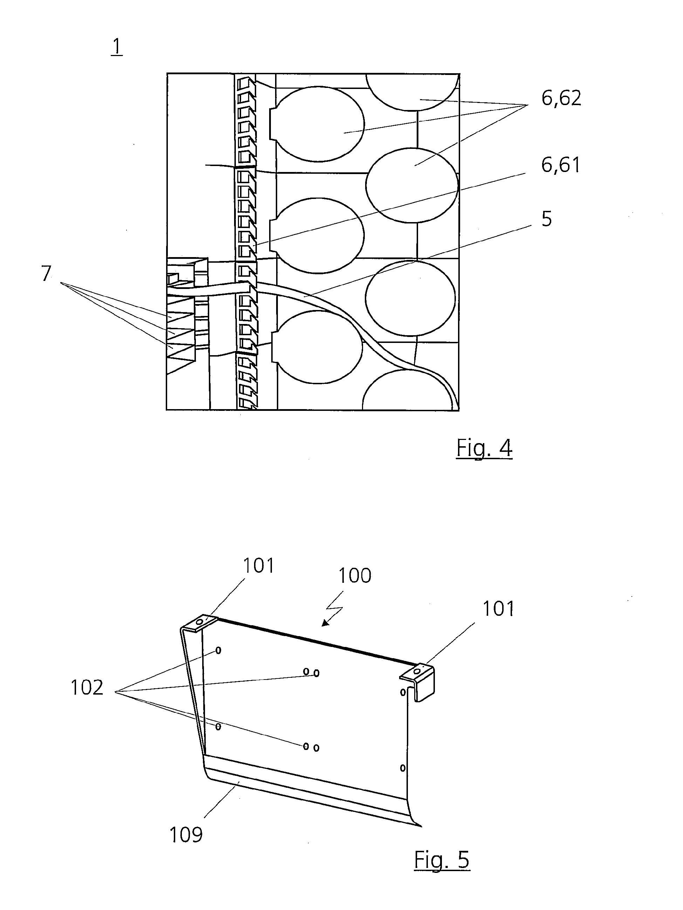

Figur 4 zeigt eine schematische Detailansicht eines Lichtwellenleiter-Verteilerschranks 1 im Bereich der ausgangsseitigen Führungselemente 6. An einem schwenkbaren Spleißmodul 7 sind die ausgangsseitig angeschlossenen Lichtwellenleiter 5 dargestellt. Diese werden über den Führungskamm 61 gebündelt und den Trommeln 62 zugeführt. Auf diesen Trommeln 62 sind auch die über ein Ablageschema geordneten Überlängen der Anschluss bzw. Patchkabel abgelegt. Besonders vorteilhaft ist, dass die in Figur 4 nicht dargestellte Drehachse A hinter den Lichtwellenleitern bzw. hinter den Patchkabeln verläuft, so dass das Einlegen der Patchkabel wesentlich dadurch erleichtert wird, dass diese nicht hinter der Drehachse A vorbeigeführt werden müssen, sondern vorne in die Spleißschublade geführt werden können.

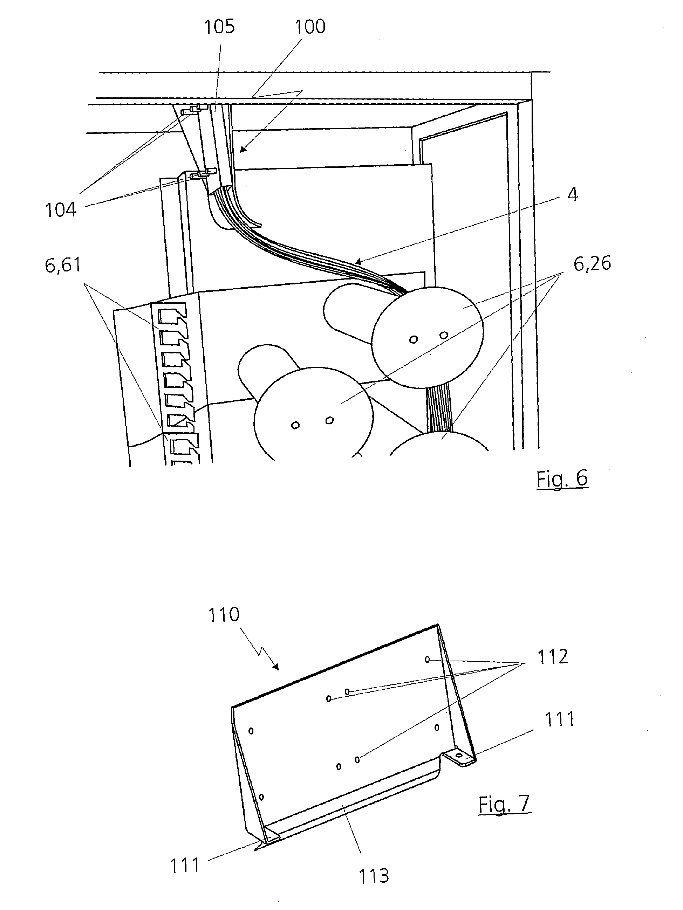

Fig. 5 zeigt eine Ausführungsform einer Modulhalterung 100 in einer perspektivischen Ansicht, bei der diese zum hängenden Einbau vorgesehen ist. Die Modulhalterung 100 zeigt dabei die Befestigungslaschen 101 zum Verschrauben beispielsweise mit dem Rahmen des Verteilerschranks sowie die Bohrungen 102 zum Durchführen beispielsweise von in Figur 5 nicht dargestellten Stehbolzen 104 zum Verschrauben eines Moduls wie eines Splittermoduls (in Fig. 6 nicht dargestellt). Der gebogene Endabschnitt 103 der Modulhalterung 100 dient dazu, einen Sollradius für aus beispielsweise Splittermodulen herausgeführten optischen Lichtwellenleitern vorzugeben.

Fig. 6 zeigt eine ausschnittsweise Darstellung des oberen Bereichs eines erfindungsgemäßen Lichtwellenleiter-Verteilerschranks, bei welchem die Modulhalterung 100 aus Fig. 5 hängend im oberen Bereich angeordnet ist. Gut erkennbar in Fig. 6 ist das an den Stehbolzen 104 angeordnete Splittermodul 105 sowie die entlang dem Endabschnitt 103 geführten Lichtwellenleiter.

Fig. 7 zeigt eine Ausführungsform der Modulhalterung 110 zum stehenden Anbringen an einem erfindungsgemäßen Lichtwellenleiter-Verteilerschrank. Wie aus den beiden vorangegangenen Figuren bekannt, zeigt die stehende Modulhalterung 110 Bohrungen 112 und Befestigungslaschen 111. In ähnlicher Weise wie in Fig. 5 und 6 gezeigt, weist auch die in Fig. 7 gezeigte Modulhalterung 110 einen gebogenen Abschnitt 113 zur Führung von Lichtwellenleitern auf.

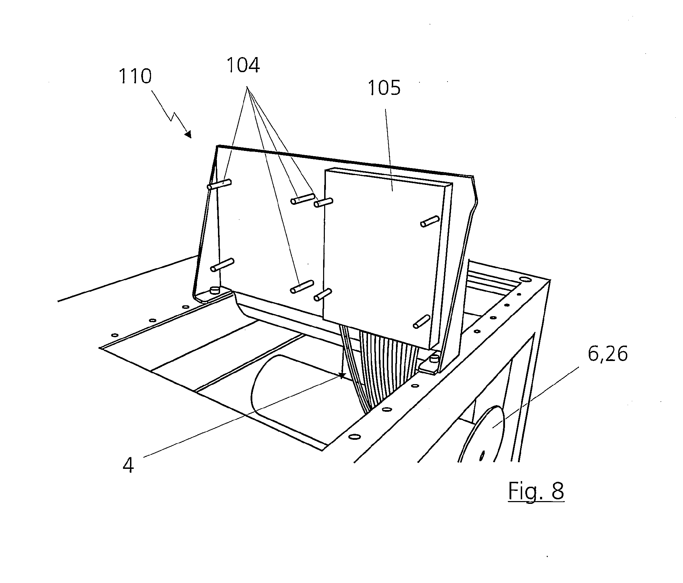

In Fig. 8 ist die in Fig. 7 gezeigte Variante zur Verdeutlichung der Einbausituation stehend auf einem Lichtwellenleiter-Verteilerschrank 1 dargestellt.

Bezugszeichenliste:
- 1: Lichtwellenleiter-Verteilerschrank
- 2: Gehäuse
- 21: Bodenabdeckung
- 22: Deckelabdeckung
- 24: Seitenteil
- 3: Kabelabfangplatte
- 31: Kabelabfangung
- 4: Einführungskabelkanal
- 41: Führungsschläuche, Miniflexschläuche
- 5: Lichtwellenleiter
- 6: Führungselemente,
- 61: Führungskamm
- 62: Trommel
- 7: Spleißmodule
- 71: Stecker
- 72: Spleißkassette
- 73: Kabelzuführung
- 8: Spleißmodulstapel
- A: Vertikalachse

## Patentansprüche

1. Lichtwellenleiter-Verteilerschrank (1), mit in einem Gehäuse (2) angeordneten Spleißmodulen (7),
**dadurch gekennzeichnet,**
- **dass** aus einer Anzahl von vertikal übereinander angeordneten Spleißmodulen (7) ein Spleißmodulstapel (8) ausgebildet ist, und
- **dass** zumindest ein Spleißmodul (7) über eine vertikale Achse (A) aus dem Spleißmodulstapel (8) nach außen ausschwenkbar ist.

2. Lichtwellenleiter-Verteilerschrank, nach Anspruch 1,
**dadurch gekennzeichnet, dass**
jedes Spleißmodul (7) eine halbe Höheneinheit aufweist und insbesondere aus einem metallischen Werkstoff hergestellt, tauchgrundiert und pulverbeschichtet ist.

3. Lichtwellenleiter-Verteilerschrank, nach Anspruch 1 oder 2,
**dadurch gekennzeichnet dass**
eine Kabelabfangplatte (3) unterhalb der Spleißmodule (7) angeordnet ist.

4. Lichtwellenleiter-Verteilerschrank nach einem der Ansprüche 1 bis 3,
**dadurch gekennzeichnet, dass**
auf der Kabelabfangplatte (3) eine Abfangeinrichtung für Faser-Zentralelemente angeordnet ist.

5. Lichtwellenleiter-Verteilerschrank nach einem der Ansprüche 1 bis 4,
**dadurch gekennzeichnet, dass**
im Anschluss an die Kabelabfangplatte (3) die Kabel (5) in Führungsschläuchen (41) am Spleißmodulstapel (8) entlang geführt sind.

6. Lichtwellenleiter-Verteilerschrank nach Anspruch 5,
**dadurch gekennzeichnet, dass**
in jeden der Führungsschläuche (41) ein Modul adressiert und auf der Eingangsseite unterscheidbar **gekennzeichnet** ist.

7. Lichtwellenleiter-Verteilerschrank nach einem der Ansprüche 1 bis 6,
**dadurch gekennzeichnet, dass**
in einem Spleißmodul (7) bis zu 24 Fasern angeschlossen sind.

8. Lichtwellenleiter-Verteilerschrank nach Anspruch 7,
**dadurch gekennzeichnet, dass**
in einem Spleißmodul (7) zwei Spleißkassetten (72) für jeweils 12 Fasern angeordnet sind.

9. Lichtwellenleiter-Verteilerschrank nach einem der Ansprüche 1 bis 8,
**dadurch gekennzeichnet, dass**
seitlich am Spleißmodulstapel (8) Führungselemente (6) entlang einer der Seitenwände (24) des Gehäuses (2)angeordnet sind, über die Patchkabel zum jeweiligen Spleißmodul (7) geführt werden können.

10. Lichtwellenleiter-Verteilerschrank nach einem der Ansprüche 1 bis 9,
**dadurch gekennzeichnet, dass**
72, 78 oder 84 Spleißmodule (7) angeordnet sind.

11. Lichtwellenleiter-Verteilerschrank nach einem der Ansprüche 5 oder 6,
**dadurch gekennzeichnet, dass**
die Führungsschläuche (41) in einer kammartigen Struktur an einer Seitenwand (24) des Verteilerschranks gehaltert sind.

12. Lichtwellenleiter-Verteilerschrank nach Anspruch 11,
**dadurch gekennzeichnet, dass**
die Führungsschläuche (41) in der kammartigen Struktur kreuzungsfrei verlegt sind.

13. Lichtwellenleiter-Verteilerschrank nach einem der Ansprüche 12 oder 13,
**dadurch gekennzeichnet, dass**
mindestens ein Spleißmodul (7) aus dem Spleißmodulstapel herausnehmbar ausgeführt ist.

14. Lichtwellenleiter-Verteilerschrank nach einem der vorangehenden Ansprüche,
**dadurch gekennzeichnet, dass**
die vertikale Achse (A) in der Weise angeordnet ist, dass sie zwischen der Rückwand des Verteilerschrankes und den an das Spleißmodul angeschlossenen Patchkabeln verläuft.

15. Lichtwellenleiter-Verteilerschrank nach einem der vorangehenden Ansprüche,
**dadurch gekennzeichnet, dass**
an dem Lichtwellen-Verteilerschrank (1) eine Modulhalterung (100,110) zur Anbringung einer Baugruppe, wie beispielsweise eines Splittermoduls (105), angeordnet ist.

16. Lichtwellenleiter-Verteilerschrank nach Anspruch 15,
**dadurch gekennzeichnet, dass**
die Modulhalterung (100,110) als stehend oder hängend an der oberen Stirnseite des Verteilerschranks (1) angeordnetes Blechformteil ausgebildet ist.
